# FASCICULE DE BREVET EUROPEEN

(11) **EP 1 599 359 B1**
(45) Date de publication et mention de la délivrance du brevet: **20.09.2006**
(21) Numéro de dépôt: 04712081.1
(22) Date de dépôt: 18.02.2004
(51) Int. Cl.: B60R 1/00

(54) **SYSTEME DE PLAGE ARRIERE POUR CABRIOLET**
SYSTEM EINES HINTEREN DECKELS FÜR EIN CABRIOLET
PACKAGE SHELF FOR A CONVERTIBLE

(30) Priorité: 28.02.2003 FR 0302490; 29.09.2003 FR 0311378
(43) Date de publication de la demande: 30.11.2005
(73) Titulaire: Société Européenne des Brevets Automobiles, 75011 Paris (FR)
(72) Inventeur: QUEVEAU, Gérard, F-79140 Le Pin (FR); QUEVEAU, Paul, F-79140 Montravers (FR); GUILLEZ, Jean-Marc, F-79140 Cirières (FR)
(74) Mandataire: Pichat, Thierry
(86) Numéro de dépôt international: PCT/FR2004/000380
(87) Numéro de publication internationale: WO 2004/078520

(56) Documents cités:
- FR-A- 2 842 467
- US-A1- 2001 004 156
- US-A1- 2002 135 201
- US-B1- 6 352 298
- US-B1- 6 364 396

## Description

La présente invention concerne un système de plage arrière pour véhicule, notamment pour un véhicule comportant un toit rigide mobile repliable dans le coffre arrière.

On connaît un système de plage arrière du type comportant une tablette adaptée à être montée mobile le long de deux rails entre, d'une part, une position sortie dans laquelle elle recouvre un espace situé entre le bord avant du capot du coffre arrière du véhicule et le dossier du siège délimitant le coffre, et, d'autre part, une position escamotée dans laquelle elle libère cet espace, chaque rail étant fixé à un élément support du véhicule et s'étendant sensiblement selon la direction longitudinale du véhicule, des moyens d'entraînement, qui comprennent une première partie solidaire de la tablette et une deuxième partie coopérant avec la première partie, étant adaptés à déplacer la tablette de l'une à l'autre de ses positions.

Un tel système est décrit dans FR-A-2 842 467 ou US 2001/004156. Dans ces documents, les rails et la deuxième partie des moyens d'entraînement sont solidaires du capot du coffre arrière. De façon connue, les moyens d'entraînement génèrent une force d'action sur la tablette et la force de réaction correspondante sur le capot, ce qui permet de déplacer la tablette par rapport au capot.

Toutefois, le montage d'un tel système de plage arrière sur un véhicule n'est pas aisé. En effet, il est nécessaire de disposer précisément la première partie des moyens d'entraînement par rapport à la deuxième partie afin de permettre le déplacement de la tablette, ce qui est délicat vu la faible accessibilité à ces moyens d'entraînement.

Le problème posé est de réaliser un système de plage arrière pouvant former un ensemble indépendant pouvant être livré sous forme de kit, dont le montage sur le véhicule ne nécessite pas d'intervention sur les moyens d'entraînement.

Une solution est un système de plage arrière du type précité comprenant des moyens d'appui sur lesquels la tablette est montée de façon mobile et qui sont adaptés à être montés de façon mobile sur l'élément support, la deuxième partie des moyens d'entraînement étant solidaire des moyens d'appui, le déplacement de la tablette par rapport aux moyens d'appui imposant celui de la tablette de l'une à l'autre de ses positions et celui des moyens d'appui par rapport à l'élément support du véhicule.

Ainsi, selon l'invention, le système de plage arrière comprend la tablette, les moyens d'appui et les moyens d'entraînement qui génèrent une force d'action sur la tablette et la force de réaction correspondante sur les moyens d'appui, les rails n'étant utilisés que pour guider le mouvement de la tablette.

Ainsi, le montage d'un système de plage arrière conforme à la présente invention sur le véhicule est particulièrement simple: les moyens d'appui sont montés sur l'élément support, et la tablette est montée le long des rails. Le positionnement précis des deux parties des moyens d'entraînement l'une par rapport à l'autre est fait lors du montage du système de plage arrière pendant lequel les moyens d'entraînement sont facilement accessibles, le système de plage arrière étant de plus facilement manipulable.

Selon un premier mode de réalisation, l'élément support auquel sont solidarisés les rails et sur lequel est monté les moyens d'appui, est le capot du coffre arrière.

Selon une variante de ce premier mode de réalisation, les rails et les moyens d'appui sont configurés de manière telle que la tablette est adaptée à être disposée sous la capot quand elle est dans sa position escamotée.

Selon une autre variante de ce premier mode de réalisation, les moyens d'appui sont formés par deux glissières qui sont adaptées à s'étendre sensiblement selon la direction longitudinale et de part et d'autre du véhicule, et qui sont montées de façon pivotante sur le capot, la tablette étant montée de façon coulissante le long des glissières et de façon pivotante et coulissante le long des rails.

Selon un second mode de réalisation, l'élément support auquel sont solidarisés les rails et sur lequel est monté les moyens d'appui, est le châssis du véhicule.

Selon une variante de ce second mode de réalisation, les rails et les moyens d'appui sont configurés de manière telle que la tablette est adaptée à être disposée derrière le dossier délimitant le coffre arrière quand elle est dans sa position escamotée.

Selon une autre variante de ce second mode de réalisation, les moyens d'appui sont formés par deux glissières qui sont adaptées à s'étendre sensiblement selon une direction inclinée par rapport à l'horizontale, de préférence la direction verticale et de part et d'autre du véhicule, et qui sont montées de façon pivotante sur le châssis, la tablette étant montée de façon coulissante le long des glissières et de façon pivotante et coulissante le long des rails.

Selon une variante particulièrement avantageuse du second mode de réalisation, la tablette comporte une surface sensiblement plane formant la tablette proprement dite et des bras de liaison qui supportent des éléments de guidage assurant les liaisons mécaniques de la tablette aux rails et aux moyens d'appui, et qui sont articulés à la surface sensiblement plane de sorte que, quand la tablette est dans sa position sortie, la surface sensiblement plane est dans une position sensiblement horizontale et, quand la tablette est dans sa position escamotée, la surface sensiblement plane est dans une position inclinée par rapport à l'horizontale, de préférence dans une position sensiblement verticale.

Ceci confère un gain de place et constitue une solution mécaniquement simple et fiable. La tablette peut ainsi pivoter derrière le dossier délimitant le coffre arrière, afin de permettre le passage d'un toit escamotable, tout en limitant l'encombrement du dispositif d'entraînement de la tablette.

D'autres avantages et particularités apparaîtront dans la description détaillée qui va suivre des modes de réalisation donnés à titre d'exemple non limitatif et illustrés aux dessins annexés dans lesquels :
La figure 1 est une vue en coupe longitudinale de la partie arrière d'un véhicule muni du système de plage arrière conforme à un premier mode de réalisation de la présente invention, la tablette étant en position sortie ;
La figure 2 est une vue semblable à la figure 1, la tablette étant en position escamotée ;
La figure 3 est une vue en coupe transversale de l'extrémité gauche du système de plage arrière ;
La figure 4 est une vue de dessus d'un détail de la figure 3 ;
La figure 5 est une vue en coupe longitudinale d'un système de plage arrière conforme à une variante du premier mode de réalisation de la présente invention, la tablette étant en position sortie ;
La figure 6 est une vue en coupe longitudinale de la partie arrière d'un véhicule muni du système de plage arrière conforme à un second mode préféré de réalisation de la présente invention, la tablette étant en position sortie ;
La figure 7 est une vue semblable à la figure 6, la tablette étant en position escamotée ; et
La figure 8 est une vue semblable aux figures 6 et 7, la tablette étant dans une position intermédiaire entre ses positions sorties et escamotées.

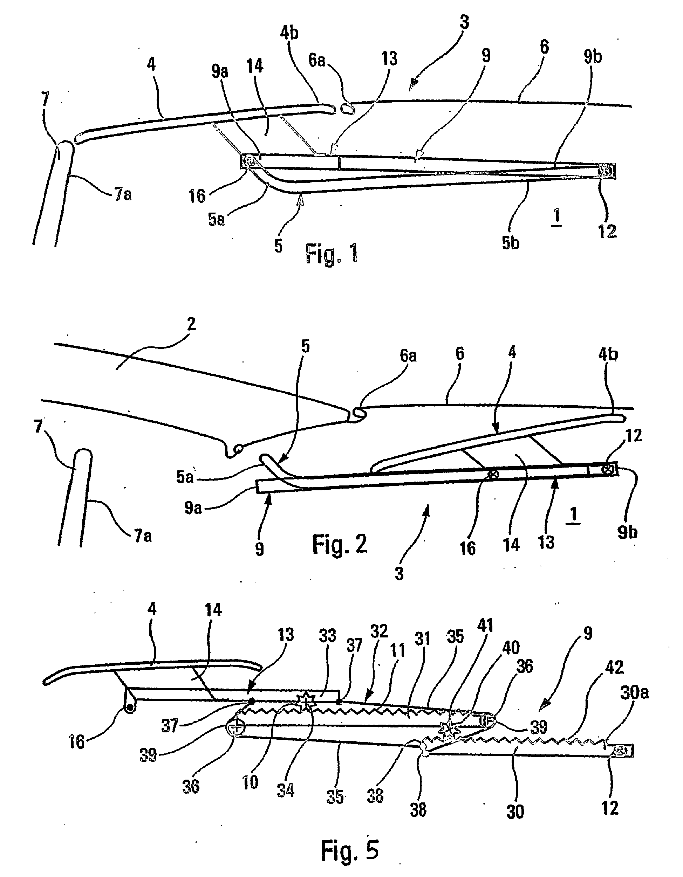

Dans les présents exemples, comme on peut le voir aux figures 1 et 2, un véhicule comprend un coffre arrière 1 et un toit 2 rigide repliable.

Le toit 2 est mobile entre une position déployée dans laquelle il recouvre l'habitacle du véhicule, et une position 5 pliée rangée dans laquelle il est plié dans le coffre arrière 1.

Le véhicule comprend également un système de plage arrière 3 qui comporte une tablette 4,48. La tablette 4,48 est montée de façon mobile le long de deux rails 5,46 parallèles qui sont fixés à un élément support 6,45 du véhicule et qui s'étendent, de chaque côté de cet élément, sensiblement selon la direction longitudinale du véhicule. La tablette 4,48 est mobile entre une position sortie et une position escamotée. Quand elle est en position sortie, la tablette 4,48 recouvre l'espace qui est situé entre le bord avant 6a du capot 6 et le dossier 7a du siège 7 délimitant le coffre 1 (figure 1), et quand elle est en position escamotée, la tablette 4,48 libère cet espace (figure 2). Des moyens d'entraînement 8 sont adaptés à déplacer la tablette 4,48 de l'une à l'autre de ses positions.

Selon l'invention, le système de plage arrière 3 comprend également des moyens d'appui 9,47 et les moyens d'entraînement 8.

La tablette 4,48 est montée mobile sur les moyens d'appui 9,47 qui sont montés de façon mobile sur l'élément support 6,45 auquel les rails 5,46 sont fixés.

Les moyens d'entraînement 8 comportent une première partie 10 et une deuxième partie 11. La première partie 10 est fixée à la tablette 4,48 et la deuxième partie 11 est fixée aux moyens d'appui 9,47. De ce fait, les moyens d'entraînement 8 génèrent le déplacement de la tablette 4,48 par rapport aux moyens d'appui 9,47. Ce mouvement relatif, le montage de la tablette 4,48 dans les rails 5,46 et le montage des moyens d'appui 9,47 sur l'élément support 6,45, permettent à la tablette 4,48 de se déplacer de l'une à l'autre de ses positions.

La forme des rails 5,46 dans les directions longitudinale et verticale est adaptée à la cinématique prédéterminée de la tablette 4,48.

Dans le premier mode de réalisation illustré aux figures 1 à 5, le capot 6 du coffre arrière 1 est l'élément support auquel sont fixés les rails 5 et sur lequel sont montés les moyens d'appui 9, la tablette 4 étant disposée sous le capot 6 quand elle est dans sa position escamotée.

Dans l'exemple illustré aux figures 1 à 4, chaque rail 5 s'étend principalement selon la direction longitudinale et est sensiblement horizontal sur la plus grande partie de sa longueur, son extrémité avant 5a formant une courbe qui s'étend vers l'avant et vers le haut, ce qui permet à la tablette 4 de coulisser sous le capot 6 et, quand elle est à proximité de sa position sortie, c'est à dire quand son bord arrière 4b arrive à proximité du bord avant 6a du capot 6, de se déplacer vers le haut afin d'arriver sensiblement au niveau de ce dernier.

Dans le présent exemple les rails 5 sont réalisés par emboutissage sur la face interne 6b du capot 6.

Dans les présents exemples, les moyens d'appui 9 sont formés par deux glissières 9 parallèles qui sont rectilignes, s'étendent sensiblement selon la direction longitudinale de part et d'autre du véhicule du véhicule et sont montées de façon pivotante sur le capot 6 entre une position d'escamotage dans laquelle la tablette 4 est dans sa position escamotée, et une position de sortie dans laquelle la tablette 4 est dans sa position sortie. Chaque glissière 9 est montée pivotante sur le capot 6 autour d'un axe de pivotement 12 situé à l'extrémité arrière 9b de la glissière 9. Quelle que soit leur position, les glissières 9 s'étend principalement selon la direction longitudinale.

La tablette 4 comporte deux éléments de guidage 13, chacun d'eux étant fixé à un bord transversal 4c correspondant de la tablette 4 par un bras de liaison 14. La surface sensiblement plane formant la tablette proprement dite, les éléments de guidage 13 et les bras de liaison 14 forment une tablette 4 sensiblement indéformable. Chaque élément de guidage 13 est adapté à assurer les liaisons mécaniques entre d'une part la tablette 4, et, d'autre part, la glissière 9 et le rail 5 correspondants.

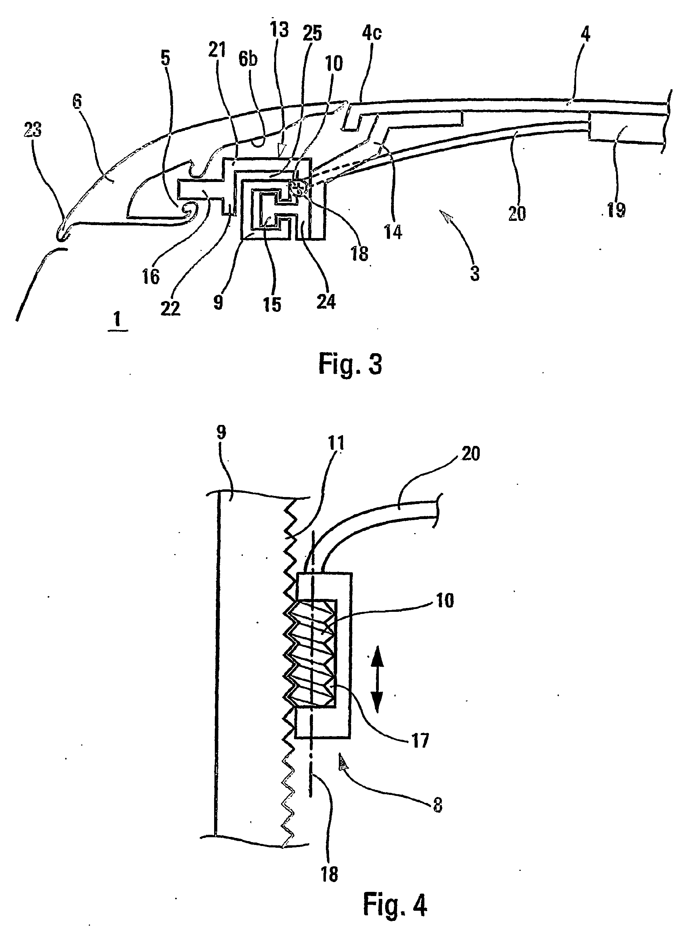

Dans l'exemple illustré à la figure 3, chaque élément de guidage 13 comprend un galet 15 par lequel la tablette 4 est montée coulissante le long de la glissière 9 correspondante, et un doigt 16 par lequel la tablette 4 est montée pivotante et coulissante le long du rail 5 correspondant.

Dans cet exemple, la première partie 10 des moyens d'entraînement 8 est formée par deux vis sans fin 10 et la deuxième partie 11 des moyens d'entraînement 8 est formée par deux crémaillères 11. Chacune des crémaillères 11 est montée le long d'une glissière 9 correspondante et s'étend, de ce fait, sensiblement selon la direction longitudinale du véhicule. Chaque vis sans fin 10 est logée dans une cavité 17 réalisée dans l'élément de guidage 13 correspondant et est montée en rotation dans cette cavité 17 autour d'un axe de rotation 18 s'étendant sensiblement selon la direction longitudinale du véhicule, de façon à coopérer avec la crémaillère 11 correspondante.

Par ailleurs, un moteur 19 est fixé à la surface inférieure de la tablette 4 et des moyens de transmission 20, par exemple des flexibles, permettent de transmettre le mouvement de l'arbre du moteur 19 aux deux vis sans fin 10.

De chaque côté du véhicule, le rail 5, la glissière 9 et l'élément de guidage 13 sont agencés de telle sorte que, quand un élément de guidage 13 est à proximité de l'extrémité arrière 9b de la glissière 9 correspondante, il est aussi à proximité de l'extrémité arrière 5b du rail 5 correspondant, la glissière 9 étant dans sa position d'escamotage et la tablette 4 étant dans sa position escamotée (figure 2). Et quand il est à proximité de l'extrémité avant 9a de la glissière 9 correspondante, il est aussi à proximité de l'extrémité avant 5a du rail 5 correspondant, la glissière 9 étant dans sa position de sortie et la tablette 4 étant dans sa position sortie (figure 1).

Le mouvement de la tablette 4 de l'une à l'autre de ses positions, par rapport au capot 6, est généré de cette façon : chaque vis sans fin 10 est entraînée en rotation dans un sens ou dans l'autre par les moyens de transmission 20 et coopère avec la crémaillère 11 correspondante de façon à entraîner la translation de chaque galet 15 le long de la glissière 9 correspondante. Les glissières 9 étant reliées au capot 6 par leur axe de pivotement 12, leur translation par rapport au capot 6 est impossible, et, de ce fait, les deux galets 15 et les deux doigts 16 ont le même mouvement de translation par rapport au capot 6. Chaque doigt 16 pivote et coulisse le long du rail 5 correspondant de façon à imposer à la tablette 4 sa trajectoire, chaque galet 15 coulissant le long de la glissière 9 rectiligne correspondante qui pivote par rapport au capot 6 de façon à permettre le déplacement de la tablette 4 par rapport au capot 6.

Dans l'exemple illustré à la figure 3, chaque élément de guidage 13 a une structure en forme de U inversé et possède une paroi de base 21 sensiblement horizontale, une paroi latérale externe 22 qui s'étend vers le bas à partir de la paroi de base 21 et qui est disposée du côté de la bordure latérale 23 du capot 6, et une paroi latérale interne 24 qui s'étend vers le bas à partir de la paroi de base 20 et qui est disposée du côté de la partie médiane du capot 6.

Le doigt 16 fait saillie transversalement vers l'extérieur par rapport à la paroi latérale externe 22 en direction de la bordure latérale 23 et pénètre dans le rail 5 correspondant qui est réalisé le long de cette bordure 23. Le galet 15 fait saillie transversalement vers l'extérieur par rapport à la paroi latérale interne 24 dans le logement 25 qui est délimité par la structure en U, et pénètre dans la glissière 9 qui a un mouvement de coulissement relatif dans ce logement 25. Cette conformation particulière de l'élément de guidage 13 rend le système de plage arrière 3 particulièrement compact.

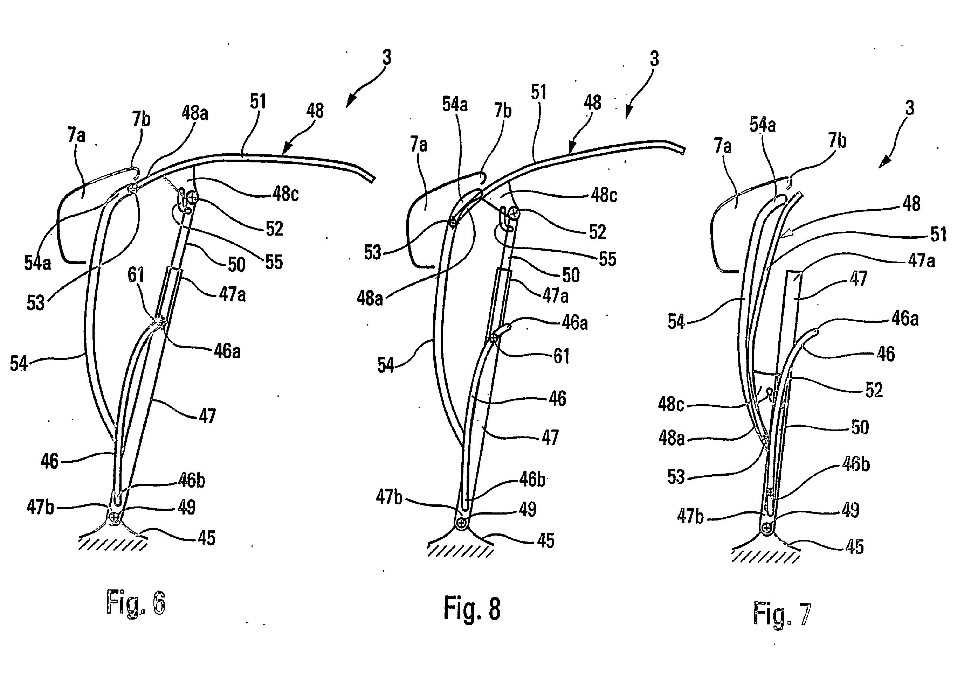

Dans l'exemple illustré à la figure 5, chaque glissière 9 est télescopique de façon à occuper le moins de place possible en position d'escamotage. Chaque glissière 9 comprend, à cet effet, un élément arrière 30, un élément avant 31 et des moyens de transmission 32.

L'élément arrière 30 est monté pivotant sur le capot 6 autour de l'axe de pivotement 12 qui est situé à l'arrière 30b de l'élément arrière 30. L'élément avant 31 est monté coulissant le long de l'élément arrière 30, la tablette 4 étant montée coulissante le long de l'élément avant 31.

Dans cet exemple, L'élément de guidage 13 comprend une réglette 33 par laquelle la tablette 4 est montée coulissante le long de l'élément avant 31.

De chaque côté du système de plage arrière, la première partie 10 des moyens d'entraînement 8 est formé par un pignon 10 qui est monté sur la réglette 33 par un axe de rotation 34 transversal au véhicule et qui est engrené avec la crémaillère 11 qui s'étend le long de l'élément avant 31. Ainsi, la mise en rotation du pignon 10 entraîne le coulissement de la tablette 4 le long de l'élément avant 31.

Les moyens de transmission 32 permettent de générer le coulissement de l'élément arrière 30 par rapport à l'élément avant 31. A cet effet, les moyens de transmission 32 comprennent, pour chaque glissière 9, deux câbles de liaison 35 et deux poulies de renvoi 36.

Chaque câble de liaison 35 est fixé, par sa première extrémité 37, à la réglette 33, et par sa deuxième extrémité 38, à l'élément arrière 30. Chaque câble de liaison 35 est enroulé autour d'une poulie de renvoi 36 correspondante qui est montée sur une extrémité correspondante de l'élément avant 31 par un axe de rotation 39 transversal au véhicule. Par ailleurs, un pignon de transmission 40 qui est monté sur l'élément avant 31 par un axe de rotation 41 transversal au véhicule, est engrené avec une crémaillère de transmission 42 qui s'étend le long de l'élément arrière 30.

Ainsi, la rotation du pignon 10 dans un sens ou dans l'autre entraîne directement le déplacement relatif de la tablette 4 par rapport à l'élément avant de glissière 31. Du fait de ce déplacement relatif, et de la présence des câbles de liaison 35, du pignon de transmission 40 et de la crémaillère de transmission 42, l'élément avant 31 coulisse par rapport à l'élément arrière 30 dans le même sens que celui du coulissement de la réglette 33 par rapport à l'élément avant 31.

Par une telle glissière 9, en utilisant des éléments de glissière ayant, dans la direction longitudinale, la même dimension que la tablette 4, l'ensemble formé par la tablette 4 et les glissière 9 n'occupe, dans la direction longitudinale, que la longueur de la tablette 4 quand celle-ci est dans sa position escamotée.

Dans le second mode ici préféré de réalisation illustré aux figures 6 à 8, le châssis 45 du véhicule est l'élément support auquel sont fixés les rails 46 et sur lequel sont montés les moyens d'appui 47, la tablette 48 étant disposée derrière le dossier 7a du siège 7 délimitant le coffre 1 quand elle est dans sa position escamotée.

Dans l'exemple illustré aux figures 6 à 8, chaque rail 46 s'étend principalement selon la direction verticale et est sensiblement vertical sur la plus grande partie de sa longueur, son extrémité supérieure 46a formant une courbe qui s'étend vers l'arrière et vers le haut, ce qui permet à la tablette 48 de coulisser derrière le dossier 7a, quand elle est à proximité de sa position sortie, c'est à dire quand son bord avant 48a arrive à proximité de l'extrémité supérieure arrière 7b du dossier 7a, de se déplacer vers l'arrière afin d'arriver sensiblement au niveau de ce dernier.

Dans les présents exemples, les moyens d'appui 47 sont formés par deux glissières 47 parallèles qui sont rectilignes, s'étendent sensiblement selon la direction verticale de part et d'autre du véhicule du véhicule et sont montées de façon pivotante sur le châssis 45 entre une position d'escamotage dans laquelle la tablette 48 est dans sa position escamotée, et une position de sortie dans laquelle la tablette 48 est dans sa position sortie. Chaque glissière 47 est montée pivotante sur le châssis 45 autour d'un axe de pivotement 49 situé à l'extrémité inférieure 47b de la glissière 47. Quelle que soit leur position, les glissières 47 s'étend principalement selon la direction verticale.

La tablette 48 comporte deux éléments de guidage (non représentés) similaires à ceux représentés à la figure 3 et qui permettent ainsi le déplacement de la tablette 48 par rapport au châssis 45. Ainsi, chaque élément de guidage est monté de façon coulissante le long de la glissière 47 correspondante, par l'intermédiaire d'un galet (similaire au galet 15, fig.3) et de façon pivotante et coulissante le long du rail 46 correspondant, par l'intermédiaire d'un doigt 61 (similaire au doigt 16, fig.3), de sorte que, quand il est à proximité de l'extrémité inférieure 47b de la glissière 47, il est aussi à proximité de l'extrémité inférieure 46b du rail 46, et quand il est à proximité de l'extrémité supérieure 47a de la glissière 47, il est aussi à proximité de l'extrémité supérieure 46a du rail 46.

Du fait que, dans le second mode de réalisation, la tablette 48 est dans une position sensiblement verticale quand elle est dans sa position escamotée, les bras de liaison 50 supportant les éléments de guidage de la tablette 48, et la surface sensiblement plane 51 formant la tablette proprement dite sont articulés l'un à l'autre. Ainsi, quand la tablette 48 est dans sa position sortie, la surface sensiblement plane 51 est dans une position sensiblement horizontale permettant le recouvrement de l'espace qui est situé entre le bord avant 6a du capot 6 et le dossier 7a du siège 7 délimitant le coffre 1, et, quand la tablette 48 est dans sa position escamotée, la surface sensiblement plane 51 est dans une position sensiblement verticale permettant son rangement derrière le dossier 7a du siège 7 délimitant le coffre 1.

Cette articulation permet d'avoir un système de plage arrière 3 d'encombrement réduit.

Dans le présent exemple, la surface sensiblement plane 51 est reliée aux bras de liaison 50 de façon pivotante par un axe de rotation 52 qui est orienté selon la direction transversale au véhicule.

Dans le présent exemple, l'articulation de la surface sensiblement plane 51 par rapport aux bras de liaison 50 est commandée par le déplacement des bras de liaison 50 par rapport au châssis 45. La surface sensiblement plane 51 comprend, de chaque côté, à l'extrémité avant de ses parois latérales, un ergot 53 qui est monté pivotant et coulissant le long d'une rampe 54 correspondante qui est solidaire du châssis 45 et qui s'étend sensiblement selon la direction verticale.

De ce fait, le déplacement des bras de liaison 50 par rapport au châssis 45, la liaison articulée de la surface sensiblement plane 51 aux bras de liaison 50, et le montage des ergots 53 dans les rampes 54 qui sont fixées au châssis 45, permettent à la surface sensiblement plane 51 de s'orienter correctement au fur at à mesure du déplacement des bras de laision 50 et de l'ensemble de la tablette 48.

La forme des rampes 54 dans les directions longitudinale et verticale est adaptée à la cinématique prédéterminée de la surface sensiblement plane 51. Dans le présent exemple, chaque rampe 54 s'étend principalement selon la direction verticale.

Les rampes permettent de faire basculer la surface sensiblement plane 51 vers l'avant du véhicule quand la tablette 48 passe de sa position sortie à sa position escamotée.

Chaque rampe 54 est sensiblement verticale sur la plus grande partie de sa longueur, et son extrémité supérieure 54a forme une courbe qui s'étend vers l'arrière et se termine sensiblement horizontalement, ce qui permet à la surface sensiblement plane 51 d'être dans une position sensiblement horizontale quand la tablette 48 est dans sa position sortie.

Par ailleurs, dans le présent exemple, un moyen de rappel 55 (tel qu'un ressort) relié d'une part à la surface sensiblement plane 51 et d'autre part au bras de liaison correspondant 50 sollicite en permanence la surface sensiblement plane 51 dans sa position sensiblement horizontale.

L'utilisation d'un moyen de rappel 55 et le fait que le déplacement des bras de laision 50 par rapprot au châssis 45 entraîne l'orientation de la surface sensiblement plane 51 permet de limiter le nombre de pièces constitutives et donc d'avoir un système de plage arrière 3 d'encombrement particulièrement réduit.

Bien évidemment, les glissières pourraient être télescopiques, comme dans le cas illustré à la figure 5.

Dans les exemples, le véhicule comporte des moyens de commande de la synchronisation (non représentés) des mouvements de la tablette 4,48 et du toit 2 de sorte que, quand le toit 2 est dans ses positions déployée ou pliée rangée, la tablette 4,48 est respectivement dans ses positions escamotée ou sortie.

Le système de plage arrière peut comprendre une seconde tablette (non illustrée) qui serait montée mobile entre une position déployée dans laquelle elle recouvre l'espace situé entre le bord arrière du toit en position déployée et le dossier du siège délimitant le coffre, et une position escamotée dans laquelle elle est disposée le long de la lunette arrière et libère cet espace. Les moyens de commande de la synchronisation des mouvements sont tels que, quand le toit est dans sa position déployée, la première tablette est dans sa position escamotée et la seconde tablette est dans sa position déployée, et, quand le toit est dans sa position pliée rangée, la première tablette est dans sa position sortie, et la seconde tablette est dans sa position escamotée.

Le système de plage arrière conforme à la présente invention forme un module indépendant pouvant être monté sur un véhicule.

Bien évidemment, le système de plage arrière n'est pas limité au mode de réalisation particulier décrit en détail.

Par exemple, les rails 5 pourraient être fixés à la face interne 6b du capot 6, par exemple vissage ou par soudage, et faire, de ce fait, partie du module de plage arrière.

Par exemple, les moyens de déplacement pourraient être formés par des vérins dont la tige serait solidaire de la tablette 4,48 et le cylindre serait solidaire des moyens d'appui 9,47, ou inversement.

Par exemple, dans le second mode de réalisation, les rails pourraient être fixés au siège (au dossier) délimitant le coffre arrière, et non pas au châssis.

## Revendications

1. Système de plage arrière (3) pour véhicule, comportant une tablette (4,48) adaptée à être montée mobile le long de deux rails (5,46) entre, d'une part, une position sortie dans laquelle elle recouvre un espace situé entre un bord avant (6a) du capot (6) du coffre arrière (1) du véhicule et un dossier (7a) de siège (7) délimitant un coffre (1) du véhicule, et, d'autre part, une position escamotée dans laquelle elle libère cet espace, chaque rail (5,46) étant fixé à un élément support (6,45) appartenant au véhicule et s'étendant sensiblement selon une direction longitudinale que présente le véhicule, des moyens d'entraînement (8), qui comprennent une première partie (10) fixée à la tablette (4,48) et une deuxième partie (11) coopérant avec la première partie (10), étant adaptés à déplacer la tablette (4,48) de l'une à l'autre de ses positions, **caractérisé en ce qu'**il comprend des moyens d'appui (9,47) sur lesquels la tablette (4,48) est montée de façon mobile et qui sont adaptés à être montés de façon mobile sur l'élément support (6,45), et **en ce que** la deuxième partie (11) des moyens d'entraînement (8) est fixée aux moyens d'appui (9,47), le déplacement de la tablette (4,48) par rapport aux moyens d'appui (9,47) imposant celui de la tablette (4,48) de l'une à l'autre de ses positions et celui des moyens d'appui (9,47) par rapport à l'élément support (6,45).

2. Système de plage arrière (3) selon la revendication 1, **caractérisé en ce que** les moyens d'appui (9,47) sont formés par deux glissières (9,47) qui sont adaptées à s'étendre de part et d'autre du véhicule et qui sont montées de façon pivotante sur l'élément support (6,45), la tablette (4,48) étant montée de façon coulissante le long des glissières (9,47) et de façon pivotante et coulissante le long des rails (5,46).

3. Système de plage arrière selon la revendication 1 ou 2,
**caractérisé en ce que**, le véhicule étant pourvu d'un toit rigide (2) mobile entre une position déployée dans laquelle il recouvre l'habitacle du véhicule et une position rangée dans laquelle il est plié dans le coffre (1), la tablette (4,48) s'étend, en position sortie, jusque dans ledit espace qui est compris entre le dossier (7a) de siège (7) et le bord avant (6a) dudit capot (6) et que recouvre ledit toit rigide (2) lorsqu'il est en position déployée.

4. Système de plage arrière (3) selon la revendication 2 ou 3, **caractérisé en ce que** chaque glissière (9,47) est télescopique.

5. Système de plage arrière (3) selon l'une des revendications 2 à 4, **caractérisé en ce que** la tablette (4,48) comporte deux éléments de guidage (13), chaque élément de guidage (13) étant monté de façon coulissante le long de la glissière (9,47) correspondante et de façon pivotante et coulissante le long du rail (5,46) correspondant.

6. Système de plage arrière (3) selon la revendication 5, **caractérisé en ce que** les moyens d'entraînement (8) comprennent deux crémaillères (11) et deux vis sans fin (10), chaque crémaillère (11) étant montée le long de la glissière (9,47) correspondante, et chaque vis sans fin (10) coopérant avec la crémaillère (11) correspondante et étant montée sur l'élément de guidage (13) correspondant de façon rotative autour d'un axe de rotation (18) s'étendant sensiblement selon la direction longitudinale.

7. Système de plage arrière (3) selon la revendication 5 ou 6, **caractérisé en ce que** chaque élément de guidage (13) a une structure en forme de U renversé et possède une paroi de base (21), une paroi latérale externe (22) s'étendant à partir de la paroi de base (21) et disposée du côté de la bordure latérale (23) de l'élément support (6,45), et une paroi latérale interne (24) s'étendant à partir de la paroi de base (21) et disposée du côté de la partie médiane de l'élément support (6,45).

8. Système de plage arrière (3) selon l'une des revendications 5 à 7, **caractérisé en ce que** chaque élément de guidage (13) comprend un galet (15) monté coulissant le long de la glissière (9,47) correspondante, et un doigt (16) monté pivotant et coulissant le long du rail (5,46) correspondant.

9. Système de plage arrière (3) selon les revendications 7 et 8, **caractérisé en ce que**, pour chaque élément de guidage (13), le doigt (16) fait saillie transversalement vers l'extérieur par rapport à la paroi latérale externe (22) en direction de la bordure latérale (23), et le galet (15) fait saillie transversalement vers l'extérieur par rapport à la paroi latérale interne (24) dans le logement (25) délimité par la structure en U.

10. Système de plage arrière (3) selon l'une des revendications 7 à 9, **caractérisé en ce que** chaque glissière (9,47) est disposée dans le logement (25) formé par la structure en U et a un mouvement de coulissement relatif dans ce logement (25).

11. Système de plage arrière (3) selon l'une des revendications 1. à 10, **caractérisé en ce que** l'élément support (6) est formé par le capot (6) du coffre arrière (1), les rails (5) et les moyens d'appui (9) étant configurés de manière telle que la tablette (4) est adaptée à être disposée sous le capot (6) quand elle est dans sa position escamotée.

12. Système de plage arrière (3) selon la revendication 11 dépendante de la revendication 2, **caractérisé en ce que** chaque glissière (9) est montée pivotante sur le capot (6) par son extrémité arrière (9b) et est adaptée à s'étendre selon une direction sensiblement horizontale.

13. Système de plage arrière (3) selon la revendication 11 ou 12 dépendantes de la revendication 5, **caractérisé en ce que**, quand l'élément de guidage (13) est à proximité de l'extrémité arrière (9b) de la glissière (9), il est aussi à proximité de l'extrémité arrière (5b) du rail (5), et quand il est à proximité de l'extrémité avant (9a) de la glissière (9), il est aussi à proximité de l'extrémité avant (5a) du rail (5).

14. Système de plage arrière (3) selon l'une des revendications 1 à 10, **caractérisé en ce que** l'élément support (45) est formé par le châssis (45) du véhicule, les rails (46) et les moyens d'appui (47) étant configurés de manière telle que la tablette (48) est adaptée à être disposée derrière le dossier (7a) du siège (7) délimitant le coffre (1) quand elle est dans sa position escamotée.

15. Système de plage arrière (3) selon la revendication 14 dépendante de la revendication 2, **caractérisé en ce que** chaque glissière (47) est montée pivotante sur le châssis (45) par son extrémité inférieure (47b) et est adaptée à s'étendre selon une direction sensiblement verticale.

16. Système de plage arrière (3) selon la revendication 14 ou 15 dépendantes de la revendication 5, **caractérisé en ce que**, quand l'élément de guidage (13) est à proximité de l'extrémité inférieure (47b) de la glissière (47), il est aussi à proximité de l'extrémité inférieure (46b) du rail (46), et quand il est à proximité de l'extrémité supérieure (47a) de la glissière (47), il est aussi à proximité de l'extrémité supérieure (46a) du rail (46).

17. Système de plage arrière (3) selon l'une des revendications 1 à 16, **caractérisé en ce que** la tablette (4) forme un ensemble sensiblement indéformable.

18. Système de plage arrière (3) selon l'une des revendications 1 à 16 dépendante de la revendication 5, **caractérisé en ce que** la tablette (48) comporte surface sensiblement plane (51) formant la tablette proprement dite et deux bras de liaison (50) qui supportent les éléments de guidage (13) et qui sont articulés par rapport à la surface sensiblement plane (51) de sorte que, quand la tablette (48) est dans sa position sortie, la surface sensiblement plane (51) est dans une position sensiblement horizontale et, quand la tablette (48) est dans sa position escamotée, la surface sensiblement plane (51) est dans une position inclinée par rapport à l'horizontale, de préférence dans une position sensiblement verticale.

19. Système de plage arrière selon la revendication 18, **caractérisé en ce que** la surface sensiblement plane (51) est reliée aux bras de liaison (50) de façon pivotante selon un axe de rotation (52) orienté selon la direction transversale au véhicule.

20. Système de plage arrière (3) selon la revendication 18 ou 19, **caractérisé en ce qu'**un moyen de rappel (55) sollicite en permanence la surface sensiblement plane (51) dans sa position sensiblement horizontale.

21. Système de plage arrière (3) selon arrière selon l'une des revendications 18 à 20 dépendante de la revendication 14, **caractérisé en ce que** l'articulation de la surface sensiblement plane (51) par rapport aux bras de liaison (50) est commandée par le déplacement des bras de liaison (50) par rapport au châssis (45).

22. Système de plage arrière (3) selon la revendication 21, **caractérisé en ce que** la surface sensiblement plane (51) comprend, de chaque côté, à l'extrémité avant de ses parois latérales, un ergot (53) qui est monté pivotant et coulissant le long d'une rampe (54) correspondante qui est solidaire du châssis (45) et qui s'étend sensiblement selon la direction verticale.

23. Système de plage arrière selon l'une des revendications précédentes **caractérisé en ce que**, le véhicule étant pourvu d'un toit rigide (2) mobile entre une position déployée dans laquelle il recouvre l'habitacle du véhicule et une position rangée dans laquelle il est plié dans le coffre (1), quand le toit (2) est dans sa position déployée, la tablette (4) est dans sa position escamotée et disposée sous le capot (6).

24. Système de plage arrière selon la revendication 3 ou 23, **caractérisé en ce que**, quand le toit (2) est dans sa position déployée, la tablette (4,48) est dans sa position escamotée et quand le toit est dans sa position pliée rangée, cette tablette est dans sa position sortie.

25. Système de plage arrière selon la revendication 1 ou 2, **caractérisé en ce que** :
- le véhicule étant pourvu d'un toit rigide (2) mobile entre une position déployée dans laquelle il recouvre l'habitacle du véhicule et une position rangée dans laquelle il est plié dans le coffre (1), ledit système comprend une seconde tablette montée mobile entre une position déployée dans laquelle elle recouvre ledit espace situé entre le bord arrière du toit, alors en position déployée, et le dossier (7a) du siège (7) délimitant le coffre, et une position escamotée dans laquelle elle est disposée le long de la lunette arrière et libère cet espace,
- quand le toit (2) est dans sa position déployée, la tablette (4,48) est dans sa position escamotée et la seconde tablette est dans sa position déployée,
- et, quand le toit est dans sa position pliée rangée, la tablette (4,48) est dans sa position sortie et la seconde tablette est dans sa position escamotée.

26. Véhicule pourvu du système de plage arrière (3) selon l'une des revendications précédentes.

## Claims

1. Shelf assembly (3) for a vehicle, comprising a shelf (4, 48) adapted to be mounted, in a movable manner, along two tracks (5, 46) between, on one hand, a deployed position in which it covers an area located between the front edge (6a) of the hood (6) of the rear boot (1) of the vehicle and a backrest (7a) of a seat (7) delimiting a boot (1), and on the other hand, a retracted position in which it uncovers this area, each track (5, 46) being fixed to a support element (6, 45) of the vehicle and substantially extending along the longitudinal direction of the vehicle, driving means (8), which comprise a first part (10) fixed to the shelf (4, 48) and a second part (11) engaging the first part (10), being adapted to displace the shelf (4, 48) from one of its positions to the other one, **characterised in that** it comprises supporting means (9, 47) onto which the shelf (4, 48) is mounted in a movable manner, and which are adapted to be mounted in a movable manner onto the support element (6, 45), and **in that** the second part (11) of the driving means (8) is fixed to the supporting means (9, 47), the displacement of the shelf (4, 48) with respect to the supporting means (9, 47) compelling the displacement of the shelf (4, 48) from one of its positions to the other one and the displacement of the supporting means (9, 47) with respect to the support element (6, 45).

2. Shelf assembly (3) set forth in claim 1, **characterised in that** the supporting means (9, 47) are formed by two sliders (9, 47) which are adapted to extend on either side of the vehicle and which are swivel mounted onto the support element (6, 45), the shelf (4, 48) being slide mounted along the sliders (9, 47) and both swivel and slide mounted along the tracks (5, 46).

3. Shelf assembly set forth in claim 1 or 2, **characterised in that** the vehicle being provided with a rigid roof (2) movable between a deployed position in which it covers the vehicle passenger compartment and a stored position in which it is folded inside the boot (1), the shelf (4, 48) extends, in its deployed position, as far as said area which is located between the backrest (7a) of the seat (7) and the front edge (6a) of the said hood (6) and which is covered by the rigid roof (2) when in its deployed position.

4. Shelf assembly (3) set forth in claim 2 or 3, **characterised in that** each slider (9, 47) is telescopic.

5. Shelf assembly (3) set forth in one of claims 2 to 4, **characterised in that** the shelf (4, 48) comprises two guiding elements (13), each guiding element (13) being slide mounted along the corresponding slider (9, 47) and in a swivel and slide manner along the corresponding track (5, 46).

6. Shelf assembly (3) set forth in claim 5, **characterised in that** the driving means (8) comprise two racks (11) and two worms (10), each rack (11) being mounted along the corresponding slider (9, 47), and each worm (10) engaging the corresponding rack (11) and being rotary mounted onto the corresponding guiding element (13) about an axis of rotation (18) extending substantially along the longitudinal direction.

7. Shelf assembly (3) set forth in claim 5 or 6, **characterised in that** each guiding element (13) has an inverted U-shaped structure and has a base wall (21), an external side wall (22) extending from the base wall (21) and placed near the side rim (23) of the support element (6, 45), and an internal side wall (24) extending from the base wall (20) and placed near the median part of the support element (6, 45).

8. Shelf assembly (3) set forth in any of claims 5 to 7, **characterised in that** each guiding element (13) comprises a roller (15) slide mounted along the corresponding slider (9, 47), and a cam pin (16) swivel and slide mounted along the corresponding track (5, 46).

9. Shelf assembly (3) set forth in claims 7 and 8, **characterised in that**, for each guiding element (13), the cam pin (16) transversally projects outwards with respect to the external side wall (22) in the direction of the side rim (23), and the roller (15) transversally projects outwards with respect to the internal side wall (24) into the housing (25) delimited by the U-shaped structure.

10. Shelf assembly (3) set forth in any of claims 7 to 9, **characterised in that** each slider (9, 47) is placed in the housing (25) created by the U-shaped structure and has a relative sliding movement in this housing (25).

11. Shelf assembly (3) set forth in any of claims 1 to 10, **characterised in that** the support element (6) is formed by the hood (6) of the rear boot (1), the tracks (5) and the supporting means (9) being configured so that the shelf (4) is adapted to being placed under the hood (6) when in its retracted position.

12. Shelf assembly (3) set forth in claim 11 depending on claim 2, **characterised in that** each slider (9) is swivel mounted onto the hood (6) at its rear end (9b) and is adapted to extend along a substantially horizontal direction.

13. Shelf assembly (3) set forth in claim 11 or 12 depending on claim 5, **characterised in that** when the guiding element (13) is close to the rear end (9b) of the slider (9), it is also close to the rear end (5b) of the track (5), and when it is close to the front end (9a) of the slider (9), it is also close to the front end (5a) of the track (5).

14. Shelf assembly (3) set forth in any of claims 1 to 10, **characterised in that** the support element (45) is formed by the frame (45) of the vehicle, the tracks (46) and the supporting means (47) being configured so that the shelf (48) is adapted to be arranged behind the backrest (7a) of the seat (7) delimiting the boot (1) when in its retracted position.

15. Shelf assembly (3) set forth in claim 14 depending on claim 2, **characterised in that** each slider (47) is swivel mounted onto the frame (45) at its rear end (47b) and is adapted to extend along a substantially vertical direction.

16. Shelf assembly (3) set forth in claim 14 or 15 depending on claim 5, **characterised in that** when the guiding element (13) is close to the lower end (47b) of the slider (47), it is also close to the lower end (46b) of the track (46), and when it is close to the upper end (47a) of the slider (47), it is also close to the upper end (46a) of the track (46).

17. Shelf assembly (3) set forth in any of claims 1 to 16, **characterised in that** the shelf (4) forms a substantially non-malleable unit.

18. Shelf assembly (3) set forth in any of claims 1 to 16 depending on claim 5, **characterised in that** the shelf (48) comprises a substantially plane surface (51) defining the shelf and two connecting arms (50) which support the guiding elements (13) and which are articulated with respect to the substantially plane surface (51) so that, when the shelf (48) is in its deployed position, the substantially plane surface (51) is in a substantially horizontal position and, when the shelf (48) is in its retracted position, the substantially plane surface (51) is in an inclined position with respect to the horizontal, preferably in a substantially vertical position.

19. Shelf assembly (3) set forth in claim 18, **characterised in that** the substantially plane surface (51) is linked, in a swivel manner, to the connecting arms (50) along an axis of rotation (52) extending along the transverse direction of the vehicle.

20. Shelf assembly (3) set forth in claims 18 or 19, **characterised in that** a means for retracting (55) constantly urges the substantially plane surface (51) towards its substantially horizontal position.

21. Shelf assembly (3) set forth in any of claims 18 to 20 depending on claim 14, **characterised in that** the articulating of the substantially plane surface (51) with respect to the connecting arms (50) is controlled by the displacement of the correcting arms (50) with respect to the frame (45).

22. Shelf assembly (3) set forth in claim 21, **characterised in that** the substantially plane surface (51) comprises, on each side, at the front end of its side walls, a stub (53) which is swivel and slide mounted along a corresponding ramp (54) which is fixed to the frame (45) and which extends substantially along the vertical direction.

23. Shelf assembly set forth in any of the preceding claims, **characterised in that** the vehicle being provided with a rigid roof movable between a deployed position in which it covers the vehicle passenger compartment and a stored position in which it is folded inside the boot (1), when the roof (2) is in its deployed position, the shelf is in its retracted position and situated under the hood (6).

24. Shelf assembly set forth in claim 3 or 23, **characterised in that** when the roof ( 2) is in its deployed position, the shelf (4, 48) is in its retracted position, and when the roof is in its stored folded position, said shelf is in its deployed position.

25. Shelf assembly set forth in claim 1 or 2, **characterised in that**
- the vehicle being provided with a rigid roof (2) movable between a deployed position in which it covers the vehicle passenger compartment and a stored position in which it is folded inside the boot (1), said assembly comprises a second shelf movable between a deployed position in which it covers the area located between the rear edge of the roof, which is then in its deployed position, and the backrest of the seat delimiting the boot, and a retracted position in which it is placed along the rear window and uncovers this area,
- when the roof (2) is in its deployed position, the shelf (4, 48) is in its retracted position and the second shelf is in its deployed position,
- and, when the roof is in its folded stored position, the shelf (4, 48) is in its deployed position, and the second shelf is in its retracted position.

26. Vehicle provided with the shelf assembly set forth in any one of the preceding claims.

## Patentansprüche

1. System eines hinteren Deckels (3) für ein Fahrzeug, mit einer Ablageplatte (4, 48), die angepaßt ist, um bewegbar entlang von zwei Schienen (5, 46) gehalten zu sein, zwischen einer ausgefahrenen Position einerseits, in der sie einen Bereich abdeckt, der sich zwischen einem vorderen Rand (6a) der Haube (6) des hinteren Kofferraums (1) des Fahrzeugs und einer Rückenlehne (7a) eines Sitzes (7), der einen Kofferraum (1) des Fahrzeugs begrenzt, befindet, und einer eingeschobenen Position andererseits, in der sie den genannten Bereich freigibt, wobei jede Schiene (5, 46) an einem Tragelement (6, 45) befestigt ist, welches zu dem Fahrzeug gehört und sich im wesentlichen entlang einer Längsrichtung, die das Fahrzeug aufweist, erstreckt, wobei ein Antriebsmittel (8), das einen ersten Teil (10), der an der Ablageplatte (4, 48) befestigt ist, und einen zweiten Teil (11), der mit dem ersten Teil (10) zusammenwirkt, aufweist, dazu angepaßt ist, um die Ablageplatte (4, 48) von ihrer einen Position in die andere zu verlagern, **dadurch gekennzeichnet, daß** es ein Abstützmittel (9, 47) aufweist, auf dem die Ablageplatte (4, 48) in beweglicher Weise gehalten ist und das dazu angepaßt ist, um in beweglicher Weise auf dem Tragelement (6, 45) angebracht zu sein, und daß der zweite Teil (11) des Antriebsmittels (8) auf dem Abstützmittel (9, 47) befestigt ist, wobei die Verlagerung der Ablageplatte (4, 48) in Bezug auf das Abstützmittel (9, 47) die Verlagerung der Ablageplatte (4, 48) von ihrer einen Position in die andere und die Verlagerung des Abstützmittels (9, 47) in Bezug auf das Tragelement (6, 45) bewirkt.

2. System eines hinteren Deckels (3) nach Anspruch 1, **dadurch gekennzeichnet, daß** das Abstützmittel (9, 47) durch zwei Führungsbahnen (9, 47) gebildet ist, die dazu angepaßt sind, um sich von einer Seite des Fahrzeugs zur anderen zu erstrecken und die in schwenkbarer Weise auf dem Tragelement (6, 45) angebracht sind, wobei die Ablageplatte (4, 48) in verschieblicher Weise entlang der Führungsbahnen (9, 47) und in schwenkbarer und verschieblicher Weise entlang der Schienen (5, 46) gehalten ist.

3. System eines hinteren Deckels nach Anspruch 1 oder 2, **dadurch gekennzeichnet, daß** das Fahrzeug mit einem starren Dach (2) versehen ist, welches zwischen einer ausgebrachten Position, in der es den Fahrgastraum des Fahrzeugs abdeckt, und einer abgelegten Position, in der es in den Kofferraum (1) gefaltet ist, bewegbar ist, wobei sich die Ablageplatte (4, 48) in ihrer ausgefahrenen Position bis in den genannten Bereich erstreckt, der sich zwischen der Rückenlehne (7a) des Sitzes (7) und dem vorderen Rand (6a) der genannten Haube (6) befindet, wobei diesen das genannte starre Dach (2) abdeckt, wenn es sich in seiner ausgebrachten Position befindet.

4. System eines hinteren Deckels (3) nach Anspruch 2 oder 3, **dadurch gekennzeichnet, daß** jede Führungsbahn (9, 47) teleskopierbar ist.

5. System eines hinteren Deckels (3) nach einem der Ansprüche 2 bis 4, **dadurch gekennzeichnet, daß** die Ablageplatte (4, 48) zwei Führungselemente (13) aufweist, wobei jedes Führungselement (13) in verschieblicher Weise entlang der entsprechenden Führungsbahn (9, 47) und in schwenkbarer und verschieblicher Weise entlang der entsprechenden Schiene (5, 46) gehalten ist.

6. System eines hinteren Deckels (3) nach Anspruch 5, **dadurch gekennzeichnet, daß** das Antriebsmittel (8) zwei Zahnstangen (11) und zwei endlose Schrauben (10) aufweist, wobei jede Zahnstange (11) entlang der entsprechenden Führungsbahn (9, 47) gehalten ist, und wobei jede endlose Schraube (10) mit der entsprechenden Zahnstange (11) zusammenwirkt und auf dem entsprechenden Führungselement (13) gehalten ist, auf eine um eine Drehachse (18), die sich im wesentlichen entlang der Längsrichtung erstreckt, drehbare Weise.

7. System eines hinteren Deckels (3) nach Anspruch 5 oder 6, **dadurch gekennzeichnet, daß** jedes Führungselement (13) eine Struktur in Form eines umgekehrten U aufweist, und eine Basiswand (21), eine äußere seitliche Wand (22), die sich ausgehend von der Basiswand (21) erstreckt und auf der Seite des seitlichen Rands (23) des Tragelements (6, 45) angeordnet ist, und eine innere seitliche Wand (24), die sich ausgehend von der Basiswand (21) erstreckt und auf der Seite des mittleren Teils des Tragelements (6, 45) angeordnet ist, aufweist.

8. System eines hinteren Deckels (3) nach einem der Ansprüche 5 bis 7, **dadurch gekennzeichnet, daß** jedes Führungselement (13) einen Führungskopf (15) aufweist, der verschieblich entlang der entsprechenden Führungsbahn (9, 47) gehalten ist, und einen Finger (16), der schwenkbar und verschieblich entlang der entsprechenden Schiene (5, 46) gehalten ist.

9. System eines hinteren Deckels (3) nach einem der Ansprüche 7 oder 8, **dadurch gekennzeichnet, daß** für jedes Führungselement (13) der Finger (16) in Querrichtung in Richtung auf die Außenseite in Bezug auf die seitliche äußere Wand (22) in Richtung auf den seitlichen Rand (23) vorspringt, und daß der Führungskopf (15) in Querrichtung in Richtung auf die Außenseite in Bezug auf die seitliche innere Wand (24) in den Aufnahmeraum (25), der durch die U-förmige Struktur begrenzt ist, vorspringt.

10. System eines hinteren Deckels (13) nach einem der Ansprüche 7 bis 9, **dadurch gekennzeichnet, daß** jede Führungsbahn (9, 47) in dem Aufnahmeraum (25) angeordnet ist, der durch die U-förmige Struktur gebildet ist und eine relative Verschiebebewegung in diesem Aufnahmeraum (25) besitzt.

11. System eines hinteren Deckels (3) nach einem der Ansprüche 1 bis 10, **dadurch gekennzeichnet, daß** das Tragelement (6) durch die Haube (6) des hinteren Kofferraums (1) gebildet ist, wobei die Schienen (5) und die Abstützmittel (9) auf eine solche Weise konfiguriert sind, daß die Ablageplatte (4) angepaßt ist, um unter der Haube (6) angeordnet zu werden, wenn sie sich in ihrer eingezogenen Position befindet.

12. System eines hinteren Deckels (3) nach Anspruch 11, soweit auf Anspruch 2 rückbezogen, **dadurch gekennzeichnet, daß** jede Führungsbahn (9) schwenkbar auf der Haube (6) angebracht ist, durch ihren hinteren Endabschnitt (9b), und dafür angepaßt ist, sich in einer im wesentlichen horizontalen Richtung zu erstrecken.

13. System eines hinteren Deckels (3) nach Anspruch 11 oder 12, soweit auf Anspruch 5 rückbezogen, **dadurch gekennzeichnet, daß** dann, wenn sich das Führungselement (13) in der Nähe des hinteren Endabschnitts (9b) der Führungsbahn (9) befindet, es sich ebenfalls in der Nähe des hinteren Endabschnitts (5b) der Schiene (5) befindet, und wenn es sich in der Nähe des vorderen Endabschnitts (9a) der Führungsbahn (9) befindet, es sich ebenfalls in der Nähe des vorderen Endabschnitts (5a) der Schiene (5) befindet.

14. System eines hinteren Deckels (3) nach einem der Ansprüche 1 bis 10, **dadurch gekennzeichnet, daß** das Tragelement (45) durch die Karosserie (45) des Fahrzeugs gebildet ist, wobei die Schienen (46) und die Abstützmittel (47) auf eine solche Weise konfiguriert sind, daß die Ablageplatte (48) dazu angepaßt ist, hinter der Rückenlehne (7a) des Sitzes (7), der den Kofferraum (1) begrenzt, angeordnet zu sein, wenn sie sich in ihrer eingezogenen Position befindet.

15. System eines hinteren Deckels (3) nach Anspruch 14, soweit auf Anspruch 2 rückbezogen, **dadurch gekennzeichnet, daß** jede Führungsbahn (47) schwenkbar auf der Karosserie (45) angebracht ist, durch ihren inneren Endabschnitt (47b), und dafür angepaßt ist, um sich in einer in wesentlichen vertikalen Richtung zu erstrecken.

16. System eines hinteren Deckels (3) nach Anspruch 14 oder 15, soweit auf Anspruch 5 rückbezogen, **dadurch gekennzeichnet, daß** dann, wenn sich das Führungselement (13) in der Nähe des unteren Endabschnitts (47b) der Führungsbahn (47) befindet, es sich ebenfalls in der Nähe des unteren Endabschnitts (46b) der Schiene (46) befindet, und wenn es sich in der Nähe des oberen Endabschnitts (47a) der Führungsbahn (47) befindet, es sich auch in der Nähe des oberen Endabschnitts (46a) der Schiene (46) befindet.

17. System eines hinteren Deckels (3) nach einem der Ansprüche 1 bis 16, **dadurch gekennzeichnet, daß** die Ablageplatte (4) eine im wesentlichen nicht verformbare Einheit bildet.

18. System eines hinteren Deckels (3) nach einem der Ansprüche 1 bis 16, soweit auf Anspruch 5 rückbezogen, **dadurch gekennzeichnet, daß** die Ablageplatte (48) eine im wesentlichen ebene Oberfläche (51) aufweist, die die eigentliche Ablageplatte bildet, und zwei Verbindungsarme (50), die die Führungselemente (13) tragen und die in Bezug auf die im wesentlichen ebene Oberfläche (51) auf eine solche Weise gelenkig angelenkt sind, daß dann, wenn sich die Ablageplatte (48) in ihrer ausgezogenen Position befindet, die im wesentlichen ebene Oberfläche (51) sich in einer im wesentlichen horizontalen Position befindet, und wenn die Ablageplatte (48) sich in ihrer eingezogenen Position befindet, die im wesentlichen ebene Oberfläche (51) sich in einer in Bezug auf die Horizontale geneigten Position befindet, vorzugsweise in einer im wesentlichen vertikalen Position.

19. System eines hinteren Deckels nach Anspruch 18, **dadurch gekennzeichnet, daß** die im wesentlichen ebene Oberfläche (51) mit den Verbindungsarmen (50) auf eine schwenkbare Weise um eine Drehachse (52) verbunden ist, die entlang der Querrichtung des Fahrzeugs orientiert ist.

20. System eines hinteren Deckels (3) nach Anspruch 18 oder 19, **dadurch gekennzeichnet, daß** ein Rückholmittel (55) die im wesentlichen ebene Oberfläche (51) ständig in ihre im wesentlichen horizontale Position drückt.

21. System eines hinteren Deckels (3) nach einem der Ansprüche 18 bis 20, soweit auf Anspruch 14 rückbezogen, **dadurch gekennzeichnet, daß** die gelenkige Verbindung der im wesentlichen ebenen Oberfläche (51) in Bezug auf die Verbindungsarme (50) durch die Verlagerung der Verbindungsarme (50) in Bezug auf die Karosserie (45) gesteuert wird.

22. System eines hinteren Deckels (3) nach Anspruch 21, **dadurch gekennzeichnet, daß** die im wesentlichen ebene Oberfläche (51) auf jeder Seite an dem vordern Endabschnitt ihrer seitlichen Wände einen Schwenkpunkt (53) aufweist, der schwenkbar und verschieblich entlang einer entsprechenden Rampe (54) gehalten ist, die fest mit der Karosserie (45) verbunden ist und die sich im wesentlichen entlang der vertikalen Richtung erstreckt.

23. System eines hinteren Deckels nach einem der vorangehenden Ansprüche, **dadurch gekennzeichnet, daß** das Fahrzeug mit einem starren Dach (2) versehen ist, das zwischen einer ausgebrachten Position, in der es den Fahrgastraum des Fahrzeugs abdeckt, und einer abgelegten Position, in der es in den Kofferraum (1) hinein gefaltet ist, bewegbar ist, wobei dann, wenn das Dach (2) sich in seiner ausgebrachten Position befindet, die Ablageplatte (4) sich in ihrer eingezogenen Position befindet und unter der Haube (6) angeordnet ist.

24. System eines hinteren Deckels nach Anspruch 3 oder 23, **dadurch gekennzeichnet, daß** dann, wenn sich das Dach (2) in seiner ausgebrachten Position befindet, die Ablageplatte (4, 48) sich in ihrer eingezogenen Position befindet, und wenn sich das Dach in seiner gefalteten, abgelegten Position befindet, die Ablageplatte sich in ihrer ausgezogenen Position befindet.

25. System eines hinteren Deckels nach Anspruch 1 oder 2, **dadurch gekennzeichnet, daß**:
- das Fahrzeug mit einem starren Dach (2) versehen ist, welches zwischen einer ausgebrachten Position, in der es den Fahrgastraum des Fahrzeugs abdeckt, und einer abgelegten Position, in der es in den Kofferraum (1) hinein gefaltet ist, bewegbar ist, wobei das genannte System eine zweite Ablageplatte aufweist, die beweglich zwischen einer ausgebrachten Position, in der sie den genannten Zwischenraum abdeckt, der sich zwischen dem hinteren Rand des Dachs, welches sich dann in seiner ausgebrachten Position befindet, und der Rückenlehne (7a) des Sitzes (7), der den Kofferraum begrenzt, befindet, und einer eingezogenen Position, in der sie entlang des Rückfensters angeordnet ist und den genannten Zwischenraum freigibt, gehalten ist,
- wenn sich das Dach (2) in seiner ausgebrachten Position befindet, die Ablageplatte (4, 48) sich in ihrer eingezogenen Position befindet, und die zweite Ablageplatte sich in ihrer ausgebrachten Position befindet,
- und, wenn sich das Dach in seiner gefalteten, abgelegten Position befindet, die Ablageplatte (4, 48) sich in ihrer ausgezogenen Position befindet und die zweite Ablageplatte sich in ihrer eingezogenen Position befindet.

26. Fahrzeug, das mit einem System eines hinteren Deckels (3) nach einem der vorangehenden Ansprüche versehen ist.
